# EUROPEAN PATENT SPECIFICATION

(11) **EP 3 765 210 B1**
(45) Date of publication and mention of the grant of the patent: **19.07.2023**
(21) Application number: 19766544.1
(22) Date of filing: 07.03.2019
(51) Int. Cl.: B05C 9/04, B05C 1/04, B05C 5/02

(54) **METHOD AND APPARATUS FOR INLINE COATING OF SUBSTRATES**
VERFAHREN UND VORRICHTUNG ZUM INLINE-BESCHICHTEN VON SUBSTRATEN
MÉTHODE ET APPAREIL POUR REVÊTEMENT EN LIGNE DE SUBSTRATS

(30) Priority: 14.03.2018 US 201815921411
(43) Date of publication of application: 20.01.2021
(73) Proprietor: Zax, Adam, San Juan Capistrano, CA 92675 (US)
(72) Inventor: EKHOLM, Roger, Fallbrook, California 92028 (US); ZAX, Adam, San Juan Capistrano, California 92675 (US)
(74) Representative: Tiburzi, Andrea
(86) International application number: PCT/US2019/021119
(87) International publication number: WO 2019/177860

(56) References cited:
- EP-A1- 1 690 602
- EP-A1- 1 690 602
- US-A- 4 643 126
- US-A- 5 186 279
- US-A1- 2003 230 003
- US-A1- 2011 097 493
- US-B1- 6 364 950
- US-B1- 6 364 950

## Description

### BACKGROUND OF THE INVENTION

### 1. Field of the Invention

Embodiments of the invention relates generally to methods and apparatus for coating substrates. More particularly, the invention relates to methods and apparatus that can concurrently coat both sides of a variety of flat materials and substrates inline while assuring a volatile organic compound (VOC) free atmosphere outside of the equipment.

### 2. Description of Prior Art and Related Information

The following background information may present examples of specific aspects of the prior art (e.g., without limitation, approaches, facts, or common wisdom) that, while expected to be helpful to further educate the reader as to additional aspects of the prior art, is not to be construed as limiting the present invention, or any embodiments thereof, to anything stated or implied therein or inferred thereupon.

Existing methods and equipment for coating substrates only provide surface preparation coating on one side of materials, such as plate glass or sheet metal. Coating the opposite side requires a secondary process. Additionally, existing methods require the flat sheet or substrate to be in a vertical position to accomplish coating. As most manufacturing lines transport flat sheets or substrates in a horizontal mode, this requires the additional step of transitioning the product from a horizontal to a vertical presentation. In the majority of cases, this must be done manually, adding to cost and labor for the coating process.

US 2011/0097493 discloses a fluid conveyance device for thin film material deposition which includes a substrate transport mechanism that causes a substrate to travel in a direction. A fluid distribution manifold includes an output face. The output dace includes a plurality of elongated slots. At least one of the elongated slots includes a portion that is non- perpendicular and non -parallel relative to the direction of substrate travel.

In view of the foregoing, there is a need for improved methods and apparatus for the inline coating of a substrate while having the ability to coat both front and back sides of the substrate at the same time.

### SUMMARY OF THE INVENTION

The present application provides a coating apparatus in accordance with claim 1 and a method of treating a substrate in accordance with claim 14. Advantageous features are provided in the dependent claims. Aspects and advantages of the present invention will become better understood with reference to the following drawings and description.

### BRIEF DESCRIPTION OF THE DRAWINGS

Some embodiments of the present invention are illustrated as an example and are not limited by the figures of the accompanying drawings, in which like references may indicate similar elements.
FIG. 1A illustrates a top perspective view of a coating apparatus according to an exemplary embodiment of the present invention;
FIG. 1B illustrates a side perspective view of the coating apparatus of FIG. 1A;
FIG. 1C illustrates a top view of the coating apparatus of FIG. 1A, showing an exemplary tubing connection configuration;
FIG. 2 illustrates a side view of the coating apparatus of FIG. 1A, showing the upper assembly in a raised configuration;
FIG. 3 illustrates a top view of the coating apparatus of FIG. 1A;
FIG. 4A illustrates top perspective view an upper assembly of the coating apparatus of FIG. 1A;
FIG. 4B illustrates a side perspective view of the upper assembly of FIG. 4A;
FIG. 5 illustrates a side view of the upper assembly of FIG. 4A;
FIG. 6 illustrates a top view of the upper assembly of FIG. 4A;
FIG. 7 illustrates an end view of the upper assembly of FIG. 4A;
FIG. 8 illustrates a bottom view of the upper assembly of FIG. 4A;
FIG. 9A illustrates a top perspective view of a distribution plate used in the upper assembly shown in FIG. 4A;
FIG. 9B illustrates a bottom, substrate facing, perspective view of the distribution plate of FIG. 9A;
FIG. 10 illustrates a bottom perspective view of a lower assembly of the coating apparatus of FIG. 1A;
FIG. 11 illustrates a top, substrate facing, perspective view of the lower assembly of FIG. 10;
FIG. 12 illustrates a side perspective view of the lower assembly of FIG. 10;
FIG. 13 illustrates a side perspective view of the lower assembly of FIG. 10, showing a substrate passing therethrough;
FIG. 14 illustrates a chemical introduction system according to an exemplary embodiment of the present invention; and
FIG. 15 illustrates details of a seal system for use with the chemical introduction system of FIG. 14.

Unless otherwise indicated illustrations in the figures are not necessarily drawn to scale.

The invention and its various embodiments can now be better understood by turning to the following detailed description wherein illustrated embodiments are described. It is to be expressly understood that the illustrated embodiments are set forth as examples and not by way of limitations on the invention as ultimately defined in the claims.

### DETAILED DESCRIPTION OF THE PREFERRED EMBODIMENTS AND BEST MODE OF INVENTION

Broadly, embodiments of the present invention provide a coating apparatus that can be used to concurrently coat both sides of a substrate while assuring a VOC free atmosphere outside the equipment. The coating apparatus can be used in-line, where flat materials and substrates that are typically carried along a conveyer may enter the coating apparatus without requiring the substrate to be moved into any other configuration. The coating apparatus may be configured to permit the user to perform any number of treatment steps while providing isolation between the steps. The substrate can be partially suspended by the coating apparatus to permit both sides to be treated at the same time. A vacuum system, including redundant perimeter negative pressure venting ducts, creates a vacuum perimeter wall around the moving, treated material to ensure a VOC free atmosphere outside the coating apparatus.

The methods described herein for material handling and coating may be performed in a relatively compact area, typically along a conveyor moving the substrate. A short span in required for multiple step treatments of a substrate. For example, as described in greater detail below, a coating apparatus may have a length, from an input end to an output end, of about three feet and such an apparatus may be used to perform a continuous, in-line, four-step coating of substrates moving, for example, at from about 0,15-0,61 m/s (0,5-2 feet/s).

The short span that is requires for these multiple steps allows the equipment to partially suspend the flat sheet to be treated, resulting in full access to both sides at the same time. This can be accomplished by feed rollers that suspend the substrate in the enclosed treatment zones. Once treated, the substrate can be moved to take away feed rollers to move the substrate out of the treatment zones and onto further plant processing.

As discussed in greater detail below, chemical fumes, such as VOCs, are captured on an inline basis, assuring no operator exposure to potentially damaging chemical fumes. This may be accomplished by using redundant perimeter negative pressure venting ducts designed with very narrow slits to create a high vacuum perimeter wall around the moving, treated material. An interior set of ducts can remove the majority of the process fumes while the outside, secondary set can perform a cleanup function, to assure no fumes escape the apparatus.

As used herein, the term "substrate" refers to any material, typically a flat material, that may be treated by the coating apparatus of the present invention. A substrate can include, as non-limiting examples, plate glass, sheet metal, rigid plastic plates, or the like.

As used herein, the term "coatings" refers to any treatment that may be applied to the substrate by the coating apparatus of the present invention. A coating can be a vapor state coating, a liquid state coating or some other surface modification treatment such as ultra violet light treatment, radiation treatment, plasma treatment, or the like. The term "treatment" may refer to any method that chemically or physically changes the substrate, any method that chemically or physically interacts with a previous application to the substrate, or any method that prepares the substrate for a subsequent chemical or physical change, such as a method that applies a catalyst to the substrate or reacts with a catalyst previously applied to the substrate.

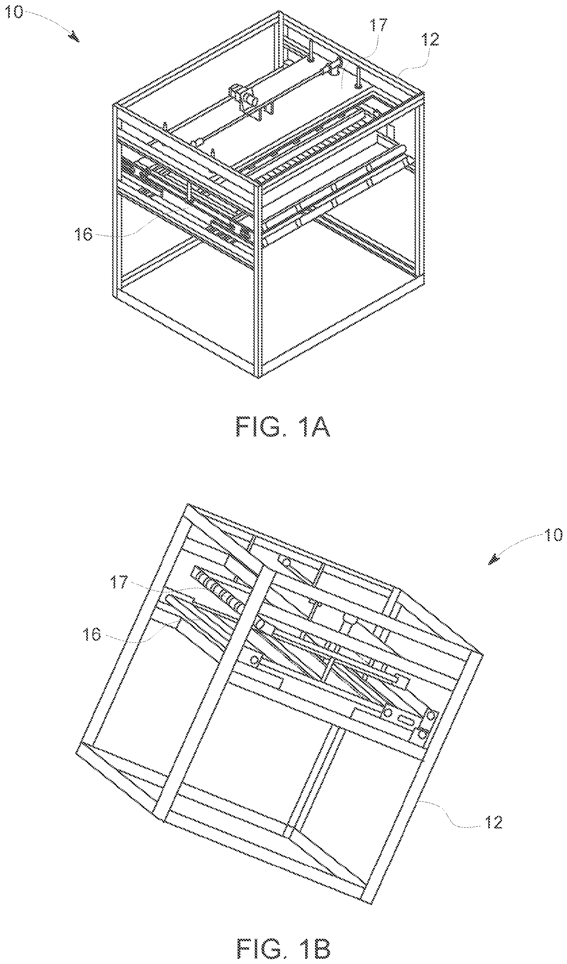

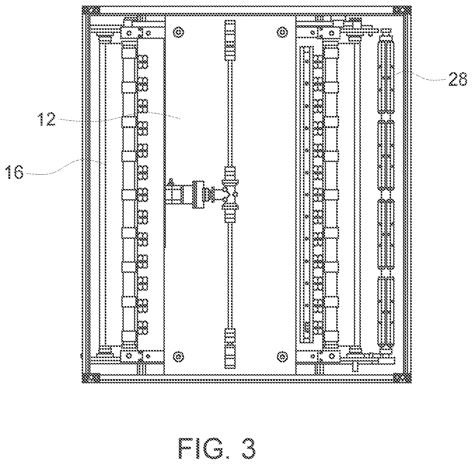

Referring now to FIGS. 1A through 3, a coating apparatus 10 includes a frame structure 12 adapted to support an upper assembly 14 and a lower assembly 16. As discussed in greater detail below, at least one of the upper assembly 14 and the lower assembly 16 may be movable vertically, relative to the frame structure 12. For example, the lower assembly 16 may be moved to a suitable height to receive a substrate, and the upper assembly 14 may be moved relative to the lower assembly 16 depending on a thickness of the substrate being coated.

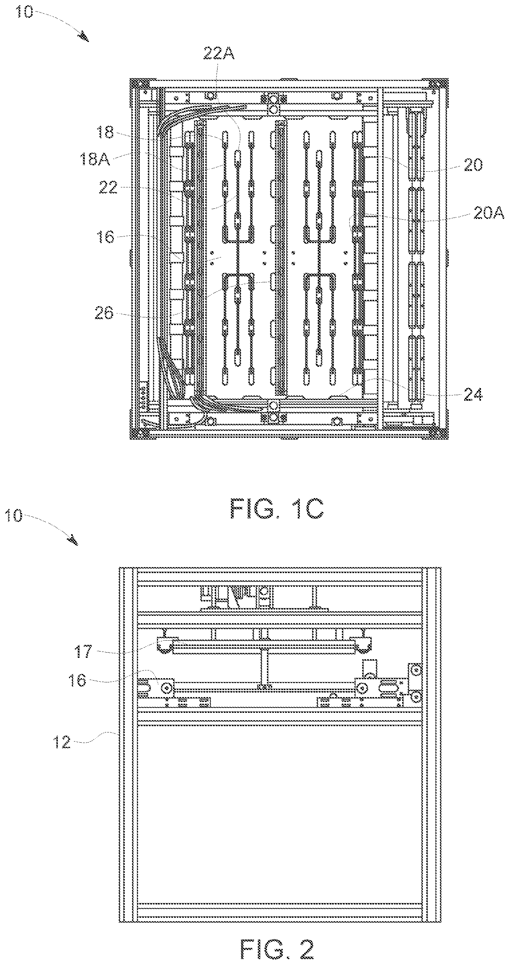

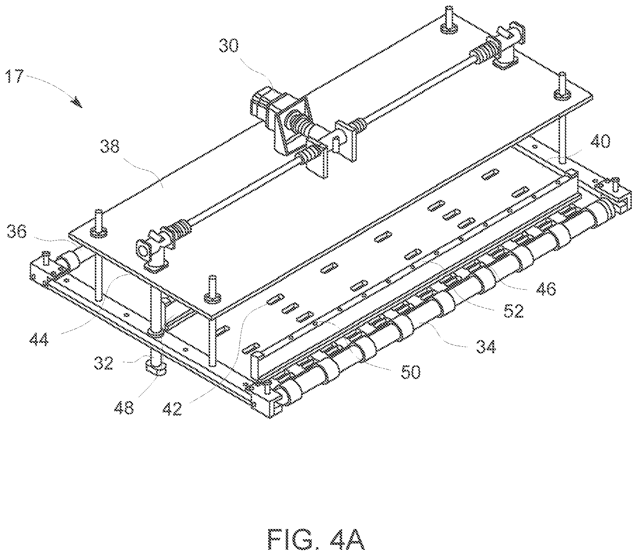

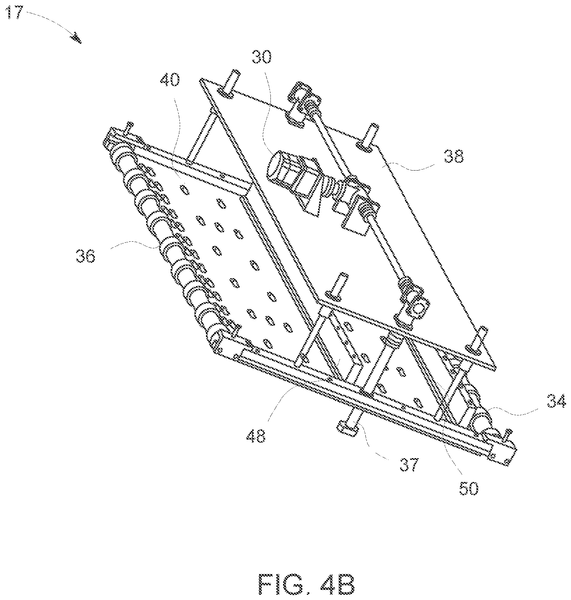

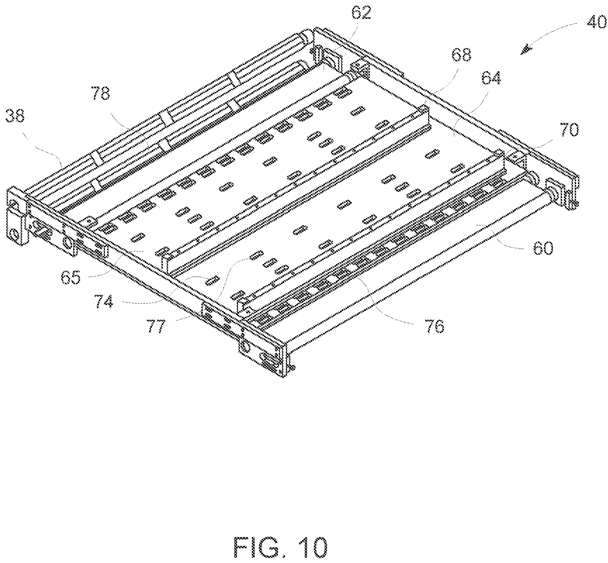

Each of the upper assembly 14 and the lower assembly 16 includes a distribution plate 40, 64, as shown in FIGS. 4A and 10, for example, that can be used to communicate a coating, a gas, a vacuum, or the like, into a treatment zone 15 located between the distribution plates 40, 64. For example, in some embodiments, as shown in FIG. 1C, coating application tubing 18 may be used to carry coating to coating distributors 18A, also referred to as coating nozzles 18A, or simply nozzles 18A, perimeter vacuum tubing 20 may be used to provide suction to vacuum nozzles 20A and interior vacuum tubing 22 may be used to provide suction to interior vacuum nozzles 22A. In addition, side perimeter nozzles 24 may be used to provide a vacuum along the sizes of the treatment zone 15 and zone separation nozzles 26 may be used to separate treatment regions within the treatment zone 15, as discussed in greater detail below. Of course, the above describes only one possible configuration, using a specific number of nozzles 18A, 20A, 22A, 24 and 26. The configurations of the nozzles, including location, number and density of the nozzles, for example, can be altered from that shown in the figures depending on the particular application.

Various treatments of the vacuumed vapor may be performed, as needed, prior to release. These treatments may include the removal of VOCs, or depending on treatment, acid scrubbers, neutralization of vapors, or removal of any controlled emission. In some embodiments, the various vacuum tubing may pass through a condensation zone to recover vaporized liquids, including unreacted treatment chemical which may be subsequently purified, as needed, and reused as appropriate.

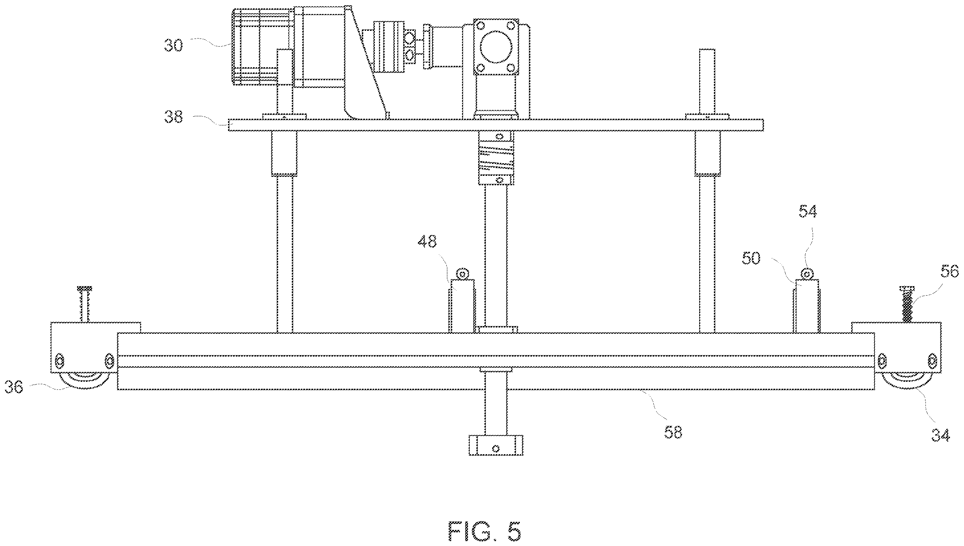

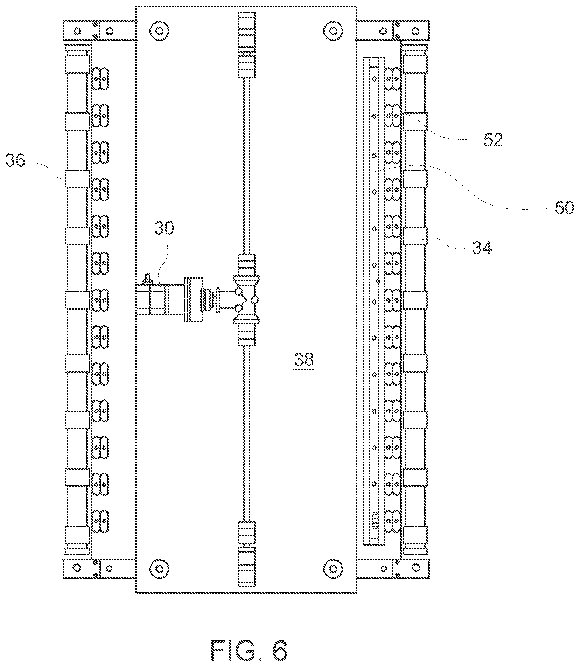

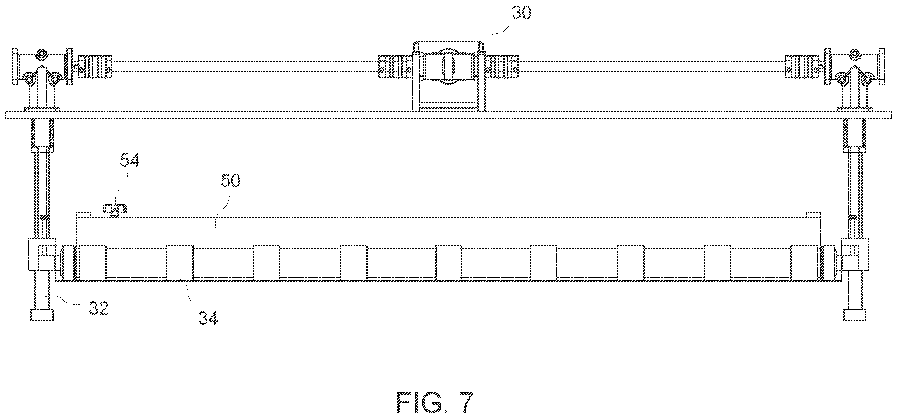

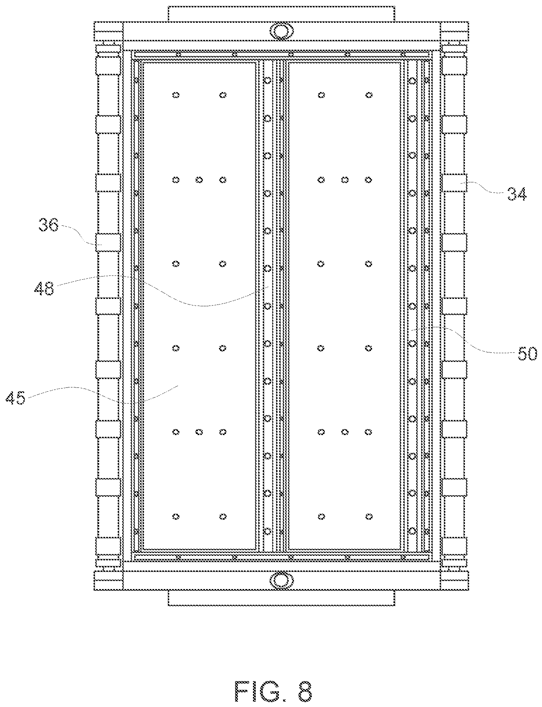

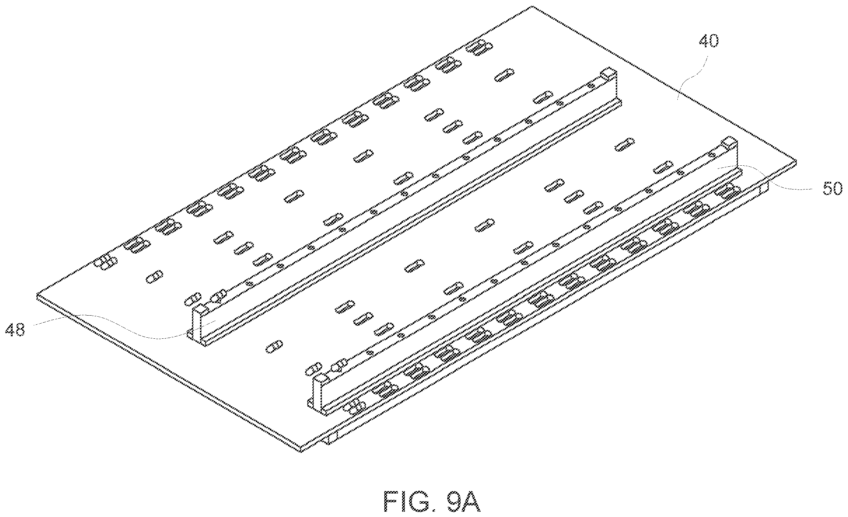

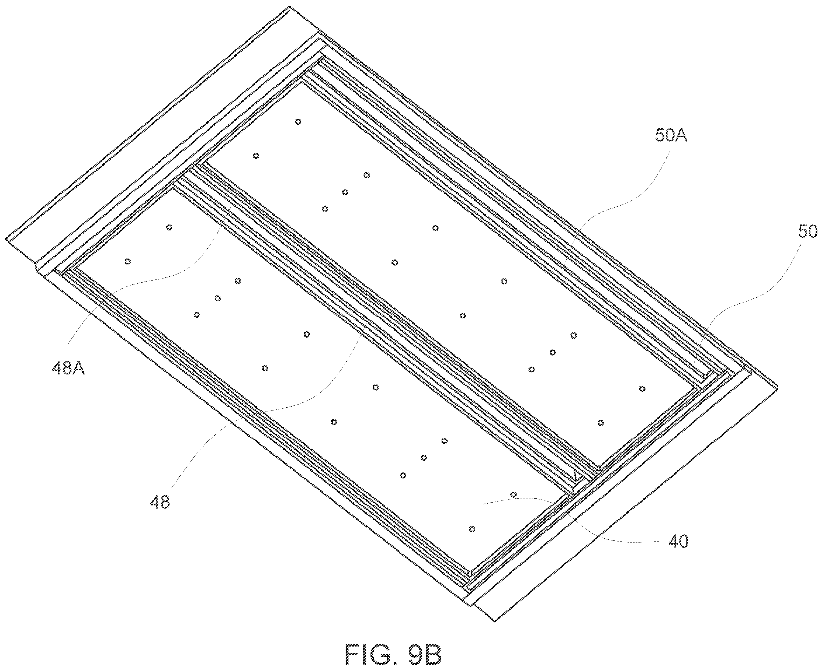

Referring to FIGS. 4A through 9B, the upper assembly 14 is shown in detail. A height adjustment system can include a servo 30 mounted on a height adjustment system plate 38 to permit the height of the distribution plate 40 to adjust relative to the lower assembly 12 (see FIG. 1B). Height adjustment legs 32 may support the distribution plate 40 at the desired height. The height adjustment system may operate via a switch (not shown) or may include sensors for automatically adjusting the height based on a thickness of a plate to be treated by the coating assembly 10.

The upper assembly 14 can include an infeed roller 34 and an outfeed roller 36 to help guide the substrate into and out of the treatment zone 15 (see FIG. 1B). An adjustment screw 56, or other similar structure, may be used to adjust the position of the infeed and outfeed rollers 34, 36. In some embodiments, as may be known in the art, the infeed and outfeed rollers 34, 36 may be resiliently movable upward (away from the substrate passing through the coating apparatus 10) to permit the substrate to enter the treatment zone 15.

The distribution plate 40 have a plurality of openings 42 into which a coating distributor 44, also referred to as a nozzle 44 may be disposed. The placement of the openings 42, the type of nozzles 44 and the treatment provided thereby may vary depending upon the desired application. In some embodiments, a distribution manifold 48, 50 may be disposed to provide a cavity 48A, 50A accessible from a bottom side 45 (or substrate facing side 45) of the distribution plate 40. One or more coating distributors 54, also referred to as nozzles 54, may be disposed on a top side of the distribution manifolds 48, 50. The distribution manifolds 48, 50 may provide an increased spacing between the nozzles 54 and the substrate as compared to the nozzles 44 disposed directly in the openings 42 of the distribution plate 40. Such increased spacing may be useful for certain treatments. For example, to provide an atomized water treatment on the substrate, the distribution manifolds 48, 50 may be used to create an even and uniform coating of water on the substrate.

In some embodiments, an outer periphery of the distribution plate 40 may include a set of two openings 46 arranged adjacent to each other. Such sets of openings 46 may be useful to provide, for example, a vacuum about the treatment zone 15 to prevent fumes (such as those from treatments applied via nozzles 44 through the openings 42) from escaping the coating apparatus 10.

In some embodiments, side members 58 may extend below a plane of the distribution plate 40. The side members 58 may help enclose the treatment zone 15 to prevent the escape of fumes.

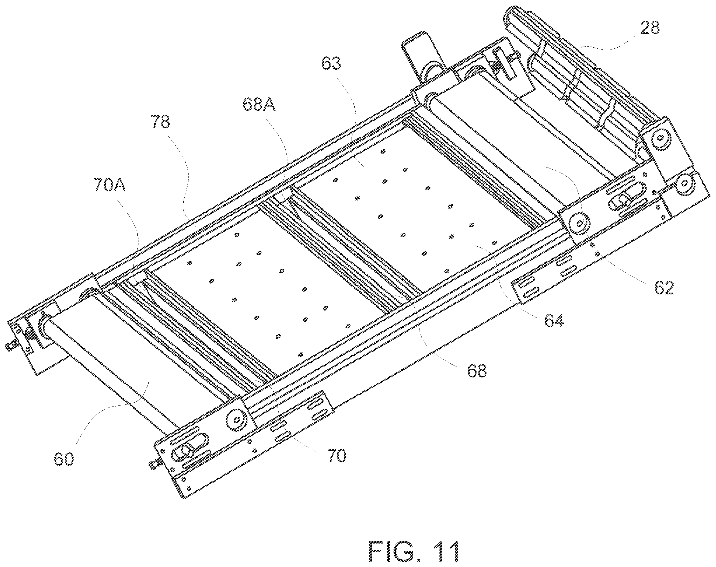

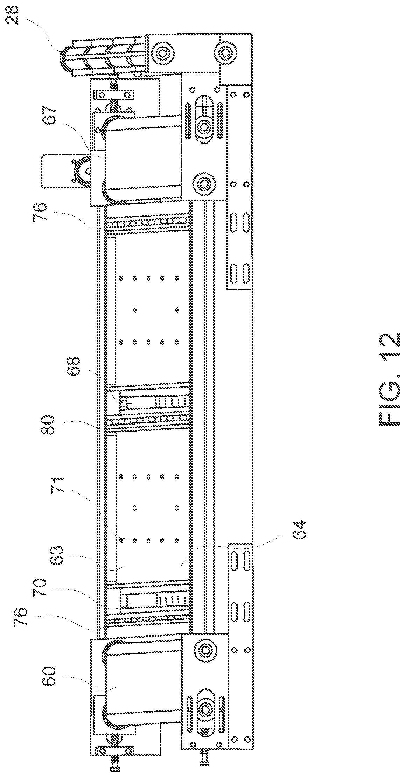

Referring to FIGS. 10 through 12, the lower assembly 16 is described in greater detail. The lower assembly 16 includes an infeed belt 60 and can include an outfeed belt 62. In some embodiments, at least one or both of the infeed belt 60 and the outfeed belt 62 are driven to move the substrate through the treatment zone 15 (see FIG. 1B), where the substrate is suspended above the top side 65 (also referred to as the substrate facing side 65) of the distribution plate 64. While a belt having a certain length is shown for the infeed and outfeed belts 60, 62, these items may be designed in various manners, such as one or more rollers, multiple belts, or the like.

In some embodiments, the distribution plate 64 of the lower assembly 16 may be a mirror image of the distribution plate 40 of the upper assembly 14. In other words, the distribution openings 42 of the distribution plate 40 may align vertically with distribution openings 72 and coating distributors 74, also referred to as nozzles 74, of the lower assembly 16. Similarly, the tubing distributions, such as those shown in FIG. 1C, may be the same for both the distribution plate 40 and the distribution plate 64. Such a configuration permits the concurrent treatment of both sides of the substrate in an identical manner. Of course, in some embodiments, treatment of one side of the substrate may be performed with one type of coating, while treatment of the other side of the substrate may be performed with a different type of coating. The coating apparatus 10 of the present invention permits such features depending on the tubing configuration, type of nozzle, distribution opening arrangement, and the like.

Similar to the distribution plate 40 of the upper assembly 14, as described above, the distribution plate 64 of the lower assembly 16 can include one or more distribution manifolds 68, 70 that can provide a chamber 68A, 70A allowing a nozzle to be located a distance away from the substrate facing side 65 of the distribution plate 64. Further similar to the distribution plate 40 of the upper assembly 14, the distribution plate 64 of the lower assembly 16 can include a double row of adjacent openings 76 that may be disposed about the outer periphery of the distribution plate 64. A vacuum may be applied to these openings 76 to create a wall to prevent escape of fumes from the coating apparatus 10.

Side walls 78 of the lower assembly 16 may be aligned with side walls 58 of the upper assembly 14. The side walls 78 may extend above a plane of the distribution plate 64 to approach or contact the side members 58 of the upper assembly 14 may help enclose the treatment zone 15 to prevent the escape of fumes.

In some embodiments, a polishing wheel 28 may be provided on an outfeed side (adjacent outfeed belt 62) of the lower assembly 14. The polishing wheel 28 may take various configurations. For example, as shown in the Figures, the polishing wheel 28 may include upper and lower brushes that turn to contact the substrate as it exits the treatment zone 15. The polishing wheel 28 may be used to remove by-products of the treatment performed by the coating apparatus 10.

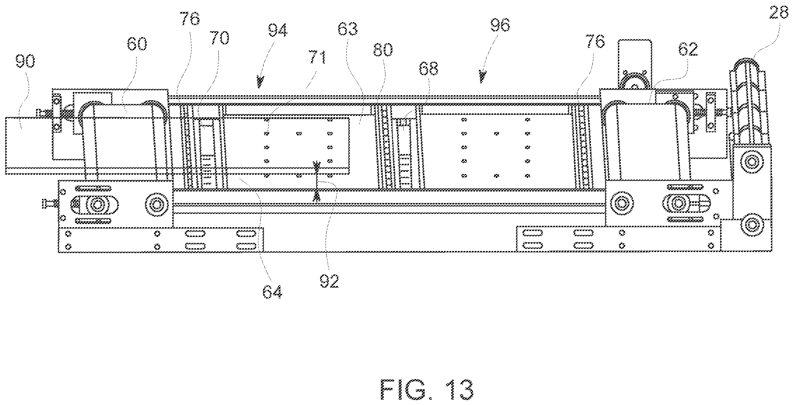

Referring now to FIGS. 1C, 2, 8 and 13, one example of substrate treatment is described. In this case, the substrate may be a plate glass member 90 (shown in FIG. 13 with the upper assembly 14 and the frame 12 not shown for clarity). The plate glass member 90 may be moved by infeed belt 60 into a first treatment zone 94. The plate glass member 90 may be suspended from the distribution plate 64 by a distance 92. Similarly, the upper assembly 16 may be lowered so that the distribution plate 40 is separated from the plate glass member 90 by a similar distance as the distance 92. A first one of the distribution manifolds 50, 70 may be configured to provide a water coating on the substrate. This may be performed by atomizing water as discussed above, or by any other means known in the art, such as a via a brush, sponge, or the like.

Tubing 18 may provide a first treatment coating via nozzles 18A in the first treatment zone 94. Vacuum may be applied by vacuum tubing 22, via vacuum nozzles 22A as a primary source of fume removal from the first treatment zone 94. As discussed above, vacuum nozzles may be provided about a perimeter of the distribution plates 40, 64 to further remove any excess of the first treatment coating provided through the nozzles 18A. A set of separation nozzles 26 may be provided at the end of the first treatment zone 94. In some embodiments, air may be provided through the separation nozzles 26 to provide an air knife. In other embodiments, vacuum may be provided through the separation nozzles 26. In either embodiment, this zone is to help separate and prevent cross-contamination from the first treatment zone 94 to a second treatment zone 96.

In the second treatment zone 96, a similar treatment may be performed, with a water coating followed by the same or different treatment coating.

As discussed above, a plurality of treatment zones may be aligned end to end to treat a substrate with multiple of the same or different treatments. Each treatment zone may be separated by separation nozzles as described above. In some embodiments, where the distance from the infeed belt and the outfeed belt is longer than a length of the substrate, supports may be added along the treatment zone to support the substrate a predetermined distance from the distribution plates.

While the term "nozzles" is used to describe a location and/or apparatus that provides an output of a coating and / or for receiving a vacuum, nozzles may describe any opening that permits the flow of a liquid or gas or that may direct a light, radiation, plasma, or the like toward the substrate. Nozzles may include any of the coating distributors as herein described. The nozzles may be directed in one or more directions, may be narrowed to create a stream of liquid or gas flow, may be elongated slits or pin point openings, or may include any variation for the delivery of liquid or gas as may be understood by one skilled in the art. The term nozzles may include any additional elements, such as UV lamps, plasma generators, or the like, that are required for the specific application.

Of course, the above is just one example of how the coating apparatus 10 may be used. Other reagents, coatings, combinations or the like may be performed. While the figures show two treatment zones 94, 96 making up the coating apparatus 10, permitting, in this case, up to four distinct treatment steps, other configurations may be contemplated. For example, only one treatment zone 94 may be provided, or additional treatment zones may be provided. In some embodiments, a treatment zone may include the introduction of more than one treatment coating, if desired.

The coating apparatus 10 may be disposed on a conveyor designed to carry substrate in a horizontal manner. The infeed belt 60 may receive the substrate from the conveyor to introduce the substrate into the coating apparatus 10. In some embodiments, the infeed belt 60 may be configured to match the speed, or to be at least as fast as that of the conveyor, thereby preventing backup of material on the conveyor. When longer treatment times are desired, in some embodiments, the infeed belt 60 may be slower than the conveyor. In these cases, the substrate may be suitably spaced on the conveyor, or the conveyor speed adjusted, to prevent backup of material on the coveyor.

The coating apparatus 10 may be sized, not only with any number of treatment zones (in its length), but also in various widths, depending on the particular application. The coating apparatus 10 may be designed to be mobile, allowing the device to be used in various assembly lines as needed.

While the drawings depict the coating apparatus 10 configured to receive a substrate arranged horizontally, the present disclosure is not limited to such a configuration. For example, the frame structure 12 may be rotated 90 degrees allowing vertically arranged substrates to be treated by the coating apparatus 10. Moreover, any configuration angle for the coating apparatus 10 is contemplated .

In some embodiments, sensors may be disposed in a location adjacent the infeed belt to determine a width of the substrate entering the coating apparatus. While FIG. 1C shows each of the nozzles 18A interconnected to nozzles 18, in some embodiments, when the width is determined to be less than the width of the treatment zone, only nozzles 18 facing the substrate may apply treatment to the substrate, while those nozzles that do not have substrate located adjacent thereto may be configured to not deliver any treatment.

An interface panel may be incorporated into the coating apparatus 10 to provide a user to adjust various parameters, including, but not limited to, infeed belt speed, treatment specifics including volume of treatment, which distributors are turned on or off, vacuum pressure / volume, and the like. The interface panel may be a touch screen mounted on the frame structure 12 or may be formed from any computing device, such as a tablet computer, smart phone, laptop, or the like, that may connect to the coating apparatus 10 via a wired or wireless connection. In some embodiments, the coating apparatus 10 may connect to a network and may be controlled via a network interface, such as, for example, via an internet-based portal.

Software may be stored in the human interface, on a web-based system, or on a network computing system to provide the user with the control features, as well as other additional features, as may be understood to one skilled in the art.

Various methods may be used to deliver the treatment to the treatment zones 94, 96. As discussed above, the treatment may be a liquid treatment, a vapor treatment, a suspension, an irradiation, such as UV, or the like. When the treatment is a vapor treatment, various delivery techniques may be used. For example, those described in U.S. Patent No. 9562288.

In some embodiments, specially designed cartridges may be used for holding the treatment solution prior to use. When different treatment solutions are utilized, in some embodiments, a shape of the cartridges for each of the different treatment solutions may vary, where the coating apparatus may have a receptacle with a mating shape, for each of the cartridges. This helps ensure the proper treatment solution is used for each of the desired steps.

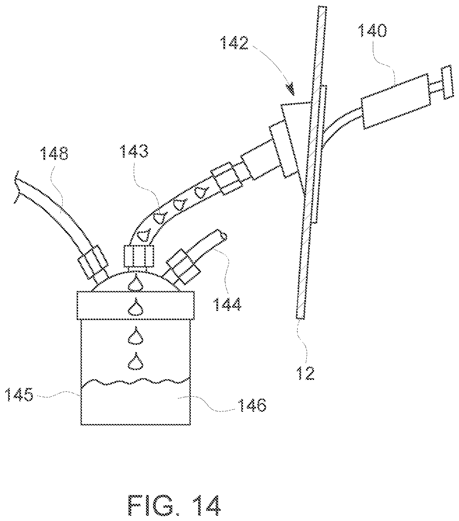

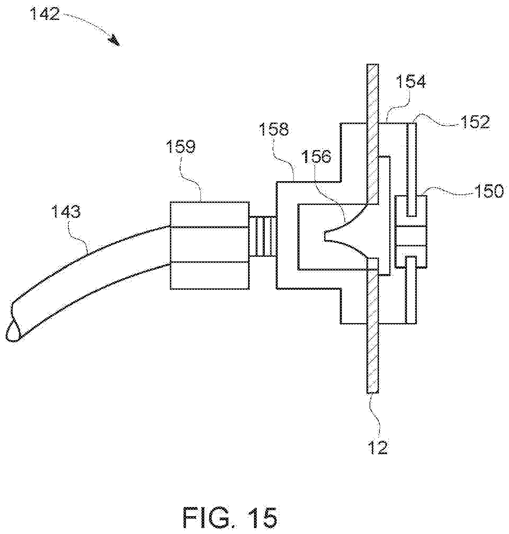

Referring now to FIGS. 14 and 15, one embodiments of a chemical introduction system is described. In this embodiment, a syringe 140, or other similar fluid transfer device, may be used to deliver solution 146 to a port 142 formed through the frame 12 of the coating apparatus 10 (see FIG. 1A). The solution may pass through a tube 143 and enter a vaporization jar 145. An inert gas, such as nitrogen, may be delivered through port 144 into the vaporization jar 145. The inert gas may be at a predetermined pressure, such as 3-10 psi, to cause the liquid in the vaporization jar 145 to vaporize and to be delivered via tube 148 to the appropriate nozzles of the coating apparatus.

Details of one embodiment of the port 142 is shown in FIG. 15. The port 142 can include a grommet 150 fitting on a sheet metal plate 152. A bulkhead can include an outer machined part 154 and an inner machined part 158 that can join together on opposite sides of the frame 12. A duckbill seal 156 may be disposed between the machined parts 154, 156 to permit the syringe 140 to pass, permitting the solution 146 to be delivered while preventing back flow of liquid or vapor to the user. A fitting, such as a compression fitting 159 may connect the tubing 143 to the port 142. As discussed above, the tubing 143 may communicate with the vaporization jar 145, where the solution 146 is stored until being delivered to the treatment zones 94, 96 (see FIG. 13).

## Claims

1. A coating apparatus comprising:
a lower assembly (16) comprising:
an infeed belt (60) configured to receive a substrate and direct the substrate to a treatment zone (15); and
an upper assembly (14) comprising:
an upper distribution plate (40) having a substrate facing side (45) facing the substrate and spaced a distance away from the substrate when the substrate is positioned in the treatment zone (15);
one or more upper coating distributors (44) adapted to deliver the treatment to the substrate while the substrate passes through the treatment zone; and
at least one upper assembly vacuum opening (22A), formed through the upper distribution plate, from one side thereof to the other side thereof, through which a vacuum is applied to provide a vacuum in a portion of the treatment zone,
**characterized in that**:
the lower assembly further comprises:
a lower distribution plate (64) having a substrate facing side (65) facing the substrate when the substrate is positioned in the treatment zone;
one or more lower coating distributors (74) adapted to deliver a treatment to the substrate while the substrate passes though the treatment zone; and
at least one lower assembly vacuum opening (42), formed through the lower distribution plate, from one side thereof to the other side thereof, through which a vacuum is applied to provide a vacuum in a portion of the treatment zone, wherein
the lower distribution plate is located vertically below a plane defined by the infeed belt and the substrate is suspended above the lower distribution plate as the substrate passes through the treatment zone; and
the at least one lower assembly vacuum opening includes a plurality of lower assembly perimeter vacuum openings disposed along each side of the treatment zone and along each end of the treatment zone and the at least one upper assembly vacuum opening includes a plurality of upper assembly perimeter vacuum openings disposed along each side of the treatment zone and along each end of the treatment zone, the plurality of lower assembly perimeter vacuum openings and the plurality of upper assembly perimeter vacuum openings creating a vacuum perimeter wall about an outer perimeter edge of the treatment zone.

2. The coating apparatus of claim 1, wherein the upper assembly is vertically spaced apart from the lower assembly by a separation distance, where the separation distance is adjustable based on a thickness of the substrate.

3. The coating apparatus of claim 1, wherein the upper assembly further includes an infeed roller (34) sandwiching the substrate between the infeed belt and the infeed roller.

4. The coating apparatus of claim 1, wherein the treatment zone is defined as a region between the upper distribution plate and the lower distribution plate.

5. The coating apparatus of claim 1, wherein the upper distribution plate is a mirror image of the lower distribution plate.

6. The coating apparatus of claim 1, wherein the lower assembly includes an outfeed belt (62) configured to receive and support the substrate as it passes out of the treatment zone.

7. The coating apparatus of claim 6, wherein the upper assembly includes an outfeed roller (36) configured to sandwich the substrate between the outfeed belt and the outfeed roller.

8. The coating apparatus of claim 1, wherein at least one of the upper assembly and the lower assembly include at least one polishing wheel (28) disposed downstream the treatment zone.

9. The coating apparatus of claim 1, wherein the treatment zone includes a water coating treatment region and a subsequent vapor treatment region.

10. The coating apparatus of claim 9, wherein the water coating treatment region includes a manifold (50, 70) attached to each of the upper distribution plate and the lower distribution plate, the manifold permitting atomized water to evenly coat the substrate as it passes through the treatment zone.

11. The coating apparatus of claim 1, wherein the treatment zone includes at least a first treatment zone (94) and a second treatment zone (96) disposed adjacent each other, wherein each of the treatment zones are separated by a vapor barrier.

12. The coating apparatus of claim 11, wherein the vapor barrier is selected from an air knife and a row of vacuum openings in the upper distribution plate and the lower distribution plate, each drawing air therein.

13. The coating apparatus of claim 3, wherein the infeed roller is configured to automatically receive substrate moving horizontally along a conveyor without user intervention.

14. A method of treating a substrate comprising:
moving the substrate horizontally along a conveyor;
receiving the substrate on an infeed belt (60) of a lower assembly (16) of a coating apparatus (10);
suspending the substrate above a lower distribution plate (64) of the lower assembly;
delivering a treatment to the substrate via one or more lower coating distributors (74) while the substrate passes through a treatment zone defined as a region adjacent the distribution plate;
wherein the coating assembly includes an upper assembly (14) having an upper distribution plate (40) having a substrate facing side (45) facing the substrate and spaced a distance away from the substrate when the substrate is positioned in the treatment zone; at least one lower assembly vacuum opening, formed through the lower distribution plate, from one side thereof to the other side thereof, through which a vacuum is applied to provide a vacuum in a portion of the treatment zone; at least one upper assembly vacuum opening, formed through the upper distribution plate, from one side thereof to the other side thereof, through which a vacuum is applied to provide a vacuum in a portion of the treatment zone; and one or more upper coating distributors (44) adapted to deliver the treatment to the substrate while the substrate passes through the treatment zone; and
wherein the at least one lower assembly vacuum opening includes a plurality of lower assembly perimeter vacuum openings disposed along each side of the treatment zone and along each end of the treatment zone and the at least one upper assembly vacuum opening includes a plurality of upper assembly perimeter vacuum openings disposed along each side of the treatment zone and along each end of the treatment zone, the plurality of lower assembly perimeter vacuum openings and the plurality of upper assembly perimeter vacuum openings creating a vacuum perimeter wall about an outer perimeter edge of the treatment zone.

15. The method of claim 20, wherein the treatment zone includes at least a first treatment zone (94) and a second treatment zone (96) disposed adjacent each other, wherein each of the treatment zones are separated by a vapor barrier.

## Patentansprüche

1. Eine Beschichtungsvorrichtung, umfassend:
Eine untere Baugruppe (16), umfassend:
Ein Zufuhrband (60), das dazu konfiguriert ist, ein Substrat aufzunehmen und das Substrat zu einer Behandlungszone (15) zu leiten; und
eine obere Baugruppe (14), umfassend:
Eine obere Verteilerplatte (40) mit einer dem Substrat zugewandten Seite (45), welche dem Substrat gegenüber liegt und einen Abstand vom Substrat entfernt ist, wenn das Substrat in der Behandlungszone (15) positioniert ist;
einen oder mehrere obere Beschichtungsverteiler (44), die zur Abgabe der Behandlung an das Substrat geeignet sind, während das Substrat die Behandlungszone durchläuft; und
mindestens eine Vakuumöffnung (22A) der oberen Baugruppe, die durch die obere Verteilerplatte hindurch gebildet ist, von einer Seite davon zur anderen Seite davon, durch die ein Vakuum angelegt wird, um in einem Teil der Behandlungszone ein Vakuum zu erzeugen, **dadurch gekennzeichnet, dass**:
Die untere Baugruppe außerdem umfasst:
Eine untere Verteilerplatte (64) mit einer dem Substrat zugewandten Seite (65), die dem Substrat gegenüber liegt, wenn das Substrat in der Behandlungszone positioniert ist; einen oder mehrere untere Beschichtungsverteiler (74), die zur Abgabe der Behandlung an das Substrat geeignet sind, während das Substrat die Behandlungszone durchläuft; und
mindestens eine Vakuumöffnung (42) der untere Baugruppe, die durch die untere Verteilerplatte hindurch gebildet ist, von einer Seite davon zur anderen Seite davon, durch die ein Vakuum angelegt wird, um in einem Teil der Behandlungszone ein Vakuum zu erzeugen, wobei die untere Verteilerplatte senkrecht unterhalb einer Ebene liegt, die durch das Zufuhr- Band definiert ist, und das Substrat ist oberhalb der unteren Verteilerplatte aufgehängt, während das Substrat die Behandlungszone durchläuft; und
die mindestens eine Vakuumöffnung der unteren Baugruppe enthält eine Mehrzahl von unteren Vakuumöffnungen am Umfang der Baugruppe, die entlang jeder Seite der Behandlungszone angeordnet sind, und entlang jedes Endes der Behandlungszone und die mindestens eine Vakuumöffnung der oberen Baugruppe umfasst eine Vielzahl von Vakuumöffnungen am Umfang der oberen Baugruppe, die jeweils entlang des Umfangs jeder Seite der Behandlungszone und entlang jedes Endes der Behandlungszone angeordnet sind, die Mehrzahl von unteren Vakuumöffnungen am Umfang der Baugruppe und die Mehrzahl der Vakuumöffnungen der oberen Baugruppen am Umfang erzeugen eine Vakuumwand um einen äußeren Umfangsrand der Behandlungszone herum.

2. Beschichtungsvorrichtung nach Anspruch 1, wobei die obere Baugruppe vertikal von der unteren Baugruppe um einen Trennabstand beanstandet ist, wobei der Trennabstand entsprechend der Dicke des Substrats einstellbar ist.

3. Beschichtungsvorrichtung nach Anspruch 1, wobei die obere Baugruppe weiterhin eine Einzugswalze (34) umfasst, und das Substrat zwischen dem Einzugsband und der Einzugswalze zu liegen kommt.

4. Beschichtungsvorrichtung nach Anspruch 1, wobei die Behandlungszone definiert ist als:
Bereich zwischen der oberen Verteilerplatte und der unteren Verteilerplatte.

5. Beschichtungsvorrichtung nach Anspruch 1, wobei die obere Verteilerplatte ein Spiegelbild der unteren Verteilerplatte ist.

6. Beschichtungsvorrichtung nach Anspruch 1, wobei die untere Baugruppe ein Auslaufband (62) umfasst, das so konfiguriert ist, dass es das Substrat aufnimmt und stützt, wenn es aus der Behandlungszone herausläuft.

7. Beschichtungsvorrichtung nach Anspruch 6, wobei die obere Baugruppe eine Auslaufwalze (36) umfasst, die so konfiguriert ist, dass das Substrat zwischen dem Ausgabeband und der Auslaufwalze zu liegen kommt.

8. Beschichtungsvorrichtung nach Anspruch 1, wobei mindestens eines von der oberen Baugruppe und der unteren Baugruppe mindestens ein Polierrad (28) umfasst, das stromabwärts von der Behandlungszone angeordnet ist.

9. Beschichtungsvorrichtung nach Anspruch 1, wobei die Behandlungszone einen Bereich zur Beschichtung mit Wasser und einen anschließenden Dampfbehandlungsbereich umfasst.

10. Beschichtungsvorrichtung nach Anspruch 9, wobei der Bereich zur Beschichtung mit Wasser einen Verteiler (50, 70) umfasst, der jeweils an der oberen Verteilerplatte und der unteren Verteilerplatte angebracht ist, wobei der Verteiler es ermöglicht, dass fein zerstäubtes Wasser das Substrat gleichmäßig überzieht, während es die Behandlungszone passiert.

11. Beschichtungsvorrichtung nach Anspruch 1, wobei die Behandlungszone mindestens eine erste Behandlungszone (94) und eine zweite Behandlungszone (96) umfasst, die benachbart zueinander angeordnet sind, wobei jede der Behandlungszonen durch eine Dampfsperre getrennt ist.

12. Beschichtungsvorrichtung nach Anspruch 11, wobei die Dampfsperre ausgewählt ist aus einem Luftmesser und einer Reihe von Vakuumöffnungen in der oberen Verteilerplatte und der unteren Verteilerplatte, von denen jede Luft ansaugt.

13. Beschichtungsvorrichtung nach Anspruch 3, wobei die Einzugswalze dazu konfiguriert ist, automatisch Substrat aufzunehmen, das sich horizontal entlang eines Förderbands bewegt, ohne dass ein Eingriff eines Bedieners dazu erforderlich ist.

14. Verfahren zur Behandlung eines Substrats, umfassend:
Bewegen des Substrats horizontal entlang eines Förderbandes;
Aufnehmen des Substrats auf einem Zuführband (60) einer unteren Baugruppe (16) einer Beschichtungs-Vorrichtung (10) ;
Aufhängen des Substrats über einer unteren Verteilerplatte (64) der unteren Baugruppe;
Zuführen einer Behandlung zum Substrat über einen oder mehrere untere Beschichtungsverteiler (74), während das Substrat eine Behandlungszone durchläuft, die definiert ist als ein Bereich, der an die Verteilerplatte angrenzt;
wobei die Beschichtungsbaugruppe eine obere Baugruppe (14) mit einer oberen Verteilerplatte (40) umfasst, mit einer dem Substrat zugewandten Seite (45), welche dem Substrat gegenüber liegt, mit einem gewissen Abstand zueinander, wenn das Substrat in der Behandlungszone positioniert ist; mindestens eine Vakuumöffnung der unteren Baugruppe, die durch die untere Verteilerplatte hindurch gebildet ist,von einer Seite davon zur anderen Seite davon, durch die ein Vakuum angewendet wird, Bereitstellung eines Vakuums in einem Teil der Behandlungszone; mindestens ein Vakuumöffnung in der oberen Baugruppe, die durch die obere Verteilerplatte von einer Seite zur anderen davon verläuft und durch die ein Vakuum angelegt wird, um in einem Teil der Behandlungszone ein Vakuum zu erzeugen;
und einen oder mehrere obere Beschichtungsverteiler (44), die so ausgelegt sind, dass sie die Behandlung an das Substrat abgeben, während das Substrat die Behandlungszone durchläuft; und
wobei die mindestens eine Vakuumöffnung der unteren Baugruppe eine Mehrzahl von unteren Vakuumöffnungen am Umfang der Baugruppe enthält, die entlang jeder Seite der Behandlungszone und entlang jedes Endes der Behandlungszone angeordnet sind, und die mindestens eine Vakuumöffnung der oberen Baugruppe umfasst eine Vielzahl von Vakuumöffnungen am Umfang der oberen Baugruppe, die jeweils entlang des Umfangs jeder Seite der Behandlungszone und entlang jedes Endes der Behandlungszone angeordnet sind, die Mehrzahl von Vakuumöffnungen am Umfang der unteren Baugruppe und die Mehrzahl der Vakuumöffnungen am Umfang der oberen Baugruppe erzeugen eine Vakuumwand um einen äußeren Umfangsrand der Behandlungszone.

15. Verfahren nach Anspruch 20, wobei die Behandlungszone mindestens eine erste Behandlungszone (94) und eine zweite Behandlungszone (96) umfasst, die benachbart zueinander angeordnet sind, wobei jede der Behandlungszonen durch eine Dampfsperre getrennt ist.

## Revendications

1. Un appareil de revêtement comprend:
un assemblage inférieur (16) comprend:
une courroie d'alimentation (60) configurée pour recevoir un substrat et diriger le substrat vers une zone de traitement (15); et
un ensemble supérieur (14) comprend:
une plaque de distribution supérieure (40) ayant une face orientée vers le substrat (45) faisant face au substrat et espacée d'une distance éloignée du substrat lorsque le substrat est positionné dans la zone de traitement (15); un ou plusieurs distributeurs de revêtement supérieur (44) adaptés pour livrer le traitement au substrat tandis que le substrat passe à travers la zone de traitement; et
au moins une ouverture à vide de l'ensemble supérieur (22A), formé à travers la plaque de distribution supérieure, d'un côté de celui-ci à l'autre côté, à travers lequel un vide est appliqué pour fournir un vide dans une partie de la zone de traitement, **caractérisé par le fait que**:
l'assemblage inférieur comprend également:
une plaque de distribution inférieure (64) ayant une face orientée vers le substrat (65) faisant face au substrat lorsque le substrat est positionné dans la zone de traitement;
un ou plusieurs distributeurs de revêtements inférieurs (74) adaptés pour livrer un traitement au substrat tandis que le substrat passe à travers la zone de traitement; et au moins une ouverture à vide de l'ensemble inférieur (42), formé à travers la plaque de distribution inférieure, d'un côté de celui-ci à l'autre côté, à travers lequel le vide est appliqué pour fournir un vide dans une partie de la zone de traitement, où la plaque de distribution inférieure est située verticalement en dessous d'un plan défini par une ceinture d'alimentation et le substrat est suspendu au-dessus de la plaque de distribution inférieure comme le substrat passe à travers la zone de traitement; et
au moins une ouverture à vide de l'ensemble inférieur inclut une pluralité d'ouvertures de vide du périmètre de l'ensemble inférieur disposé le long de chaque côté de la zone de traitement et le long de chaque extrémité de la zone de traitement et au moins une ouverture à vide de l'ensemble inférieur inclut une pluralité d'ouvertures de vide du périmètre de l'ensemble inférieur disposé le long de chaque côté de la zone de traitement et le long de chaque extrémité de la zone de traitement, la pluralité d'ouvertures de vide du périmètre de l'ensemble inférieur et la pluralité d'ouvertures de vide du périmètre de l'ensemble supérieur créant un mur d'enceinte à vide autour d'un bord de périmètre extérieur de la zone de traitement.

2. L'appareil de revêtement de la revendication 1, où l'ensemble supérieur est espacé verticalement de l'ensemble inférieur par une distance de séparation, où la distance de séparation est ajustable fondée sur une épaisseur du substrat.

3. L'appareil de revêtement de la revendication 1, où l'ensemble supérieur inclut également un rouleau d'alimentation (34) prenant en sandwich le substrat entre la courroie d'alimentation et le rouleau d'alimentation.

4. L'appareil de revêtement de la revendication 1, où la zone de traitement est définie comme une région entre la plaque de distribution supérieure et la plaque de distribution inférieure.

5. L'appareil de revêtement de la revendication 1, où la plaque de distribution supérieure est une image miroir de la plaque de distribution inférieure.

6. L'appareil de revêtement de la revendication 1, où l'ensemble inférieur inclut une courroie de sortie (62) configurée pour recevoir et soutenir le substrat lorsqu'il passe dans la zone de traitement.

7. L'appareil de revêtement de la revendication 6, où l'ensemble supérieur inclut un rouleau de sortie (36) configuré pour prendre en sandwich le substrat entre la courroie de sortie et le rouleau de sortie.

8. L'appareil de revêtement de la revendication 1, où au moins un ensemble supérieur et l'ensemble inférieur incluent au moins un disque de polissage (28) disposé en aval de la zone de traitement.

9. L'appareil de revêtement de la revendication 1, où la zone de traitement inclut une région de traitement de revêtement de l'eau et une région de traitement ultérieur à la vapeur.

10. L'appareil de revêtement de la revendication 9, où une région de traitement de revêtement de l'eau inclut un collecteur (50, 70) attaché à chacune des plaques de distribution supérieures et la plaque de distribution inférieure, le collecteur permettant à l'eau atomisée de recouvrir uniformément le substrat lorsqu'il passe à travers la zone de traitement.

11. L'appareil de revêtement de la revendication 1, où la zone de traitement inclut au moins une première zone de traitement (94) et une seconde zone de traitement (96) disposées de manière adjacente l'une à l'autre, où chaque zone de traitement est séparée par un pare-vapeur.

12. L'appareil de revêtement de la revendication 11, où le pare-vapeur est sélectionné à partir d'une lame d'air et une rangée d'ouverture de vide dans la plaque de distribution supérieure et la plaque de distribution inférieure, chacune aspirant de l'air à l'intérieur.

13. L'appareil de revêtement de la revendication 3, où le rouleau d'alimentation est configuré pour recevoir automatiquement le substrat se déplaçant de façon horizontale le long d'un transporteur sans une intervention de la part de l'utilisateur.

14. Une méthode pour traiter un substrat comprend:
déplacer le substrat de manière horizontale le long du transporteur;
réceptionner le substrat sur une courroie d'alimentation (60) d'un ensemble inférieur (16) d'un appareil de revêtement (10);
suspendre le substrat au-dessus d'une plaque de distribution inférieure (64) de l'ensemble inférieur;
livrer un traitement au substrat à travers un ou plusieurs distributeurs de revêtement inférieurs (74) tandis que le substrat passe à travers une zone de traitement définie en tant que région adjacente à la plaque de distribution;
où l'ensemble de revêtement inclut un ensemble supérieur (14) ayant une plaque de distribution supérieure (40) ayant une face orientée vers le substrat (45) faisant face au substrat et espacé d'une certaine distance du substrat lorsque le substrat est positionné dans la zone de traitement;
au moins une ouverture à vide de l'ensemble inférieur, formé à travers la plaque de distribution inférieure, d'un côté à l'autre, à travers lesquels un vide est appliqué pour fournir un vide dans une partie de la zone de traitement; au moins une ouverture à vide de l'ensemble supérieur, formé à travers la plaque de distribution supérieure, d'un côté à l'autre, à travers laquelle un vide est appliqué pour fournir un vide dans une partie de la zone de traitement; et un ou plusieurs distributeurs de revêtement supérieurs (44) adaptés pour livrer le traitement au substrat tandis que le substrat passe à travers la zone de traitement; et où au moins une ouverture de vide de l'ensemble inférieur inclut une pluralité d'ouvertures de vide du périmètre d'assemblage inférieur disposé le long de chaque côté de la zone de traitement et le long de chaque extrémité de la zone de traitement et au moins une ouverture de vide de l'ensemble supérieur inclut une pluralité d'ouvertures de vide périmétrique de l'ensemble supérieur disposé le long de chaque côté de la zone de traitement et le long de chaque extrémité de la zone de traitement, la pluralité d'ouvertures de vide du périmètre d'assemblage et la pluralité d'ouvertures de vide périmétrique de l'ensemble supérieur créées un mur d'enceinte à vide autour du bord du périmètre extérieur de la zone de traitement.

15. La méthode de la revendication 20, où la zone de traitement inclut au moins une première zone de traitement (94) et une seconde zone de traitement (96) disposées de manière adjacente l'une à l'autre, où chaque zone de traitement est séparée par un pare-vapeur.
